# EUROPEAN PATENT APPLICATION

(11) **EP 4 007 448 A1**
(43) Date of publication of application: **01.06.2022**
(21) Application number: 21218471.7
(22) Date of filing: 29.11.2018
(51) Int. Cl.: H05B 3/26, A24F 47/00, G01K 7/22, G01K 13/00

(54) **HEATING ELEMENT WITH TEMPERATURE CONTROL AND SMOKING SET**

(30) Priority: 30.11.2017 CN 201721659527 U
(62) Divisional of application: 18209217.1
(71) Applicant: Shenzhen First Union Technology Co., Ltd., 518103 Shenzhen, Guangdong (CN)
(72) Inventor: CHENG, Kun, Shenzhen, 518103 (CN); XU, Zhongli, Shenzhen, 518103 (CN); LI, Yonghai, Shenzhen, 518103 (CN)
(74) Representative: Proi World Intellectual Property GmbH

(57) **Abstract**

A heating element with temperature control and a smoking set having same are disclosed, the heating element includes a heating body, the heating body has a first surface and a second surface; a heating wire is arranged on the first surface and a temperature controlling wire is arranged on the second surface; a heating pin, one end thereof is coupled with one end of the heating wire; a temperature controlling pin, one end thereof is coupled with the temperature controlling wire; a common pin, one end thereof is coupled with an opposite end of the heating wire and an opposite end of the temperature controlling pin of the temperature controlling wire; by means of the common pin, the number of pins are declined to save cost.

## Description

### TECHNICAL FIELD

The present disclosure relates to the field of smoking sets using ceramic heating elements, and particularly, to a heating element with temperature control and a smoking set having same.

### BACKGROUND ART

Currently, ceramic heating elements, working at a range of low and middle temperatures with high efficiency and environmental protection, are widely applied to our daily lives, industrial and agricultural technologies, communications and medical treatment which are applicable to heating at the range of low and middle temperatures, the ceramic heating elements are configured for supplying heat source to a heater, or to be used as the heater.

Since the ceramic heating elements have advantages like heating up quickly, fast temperature compensation and heating evenly, in the field of low-temperature baked smoking set generally uses ceramic heating elements as the heater. In the prior art low-temperature baked smoking set, it uses the ceramic heating element to heat on both sides, which can't control the temperature of the ceramic heating element. But in some ceramic heating elements, a temperature controlling wire is used to control a temperature of the ceramic heating element, the temperature controlling wire and a heating wire are a same wire, in a process of controlling the temperature, a temperature deviation appears easily so that the temperature controlling is not precise. Moreover, when a plurality of temperature controlling wires and heating wires are adopted, each temperature controlling wire and each heating wire respectively need pins to be coupled with the circuit, therefore needing a lot of electronic pins.

### SUMMARY

In view of the drawbacks in the prior art, the present disclosure relates to a heating element with temperature control and a low-temperature baked smoking set have the same, aiming to precisely control a temperature of the heating element and reduce usage of electronic pins.

In order to solve the above technical problem, the present disclosure provides a heating element with temperature control according to independent claim 1 whereas various embodiments of the heating element and improvements thereto are recited in the dependent claims. The heating element with temperature control includes a heating body, the heating body has a first surface and a second surface; a heating wire is arranged on the first surface and a temperature controlling wire is arranged on the second surface; a heating pin, one end thereof is coupled with one end of the heating wire; a temperature controlling pin, one end thereof is coupled with the temperature controlling wire; a common pin, one end thereof is coupled with an opposite end of the heating wire and an opposite end of the temperature controlling pin of the temperature controlling wire.

Preferably, the heating body is bored with a through hole, a electric conductor is inserted into the through hole, the opposite end of the heating wire and the opposite end of the temperature controlling wire are respectively coupled with two ends of the electric conductor, the common pin is coupled with the electric conductor.

Preferably, the electric conductor is connected with the through hole via snap fit, a glue or thread screw etc.

Preferably, the heating wire, the temperature controlling wire and the common pin are welded with the electric conductor.

Preferably, the heating body is connected to a mounting stage.

Preferably, the heating pin, the temperature controlling pin and the common pin are attached on two maximum sized sides of the mounting stage.

Preferably, a surface of the heating element with temperature control is coated with ceramic glazes.

To solve the above problem, the present disclosure further provides a low-temperature baked smoking set having a controller and the aforementioned ceramic heating element with temperature control.

Additional aspects and advantages of the present disclosure will be: by replying on the ceramic heating element and the smoking set having same disclosed by the present disclosure, the heating element including a heating body, the heating body including a first surface and a second surface, a heating wire being arranged on the first surface and a temperature controlling wire being arranged on the second surface, with separation setting of the heating wire and the temperature controlling wire, the heating function and the temperature detecting function may be realized separately, which is in favor of more precisely controlling the temperature of the ceramic heating element. On the other hand, one end of the heating wire is coupled with the heating pin and one end of the temperature controlling wire are coupled with the temperature controlling pin, the opposite ends of the heating wire and the temperature controlling wire are both coupled with the common pin, which may reduce usage of the electronic pins, so as to save the cost.

### BRIEF DESCRIPTION OF THE DRAWINGS

Many aspects of the present disclosure can be better understood with reference to the following drawings. The components in the drawings are not necessarily drawn to scale, the emphasis instead being placed upon clearly illustrating the principles of the present disclosure. Moreover, in the drawings, like reference numerals designate corresponding parts throughout the several views.
FIG. 1 is a cross-sectional view of a low-temperature baked smoking set in accordance with one embodiment of the present disclosure;
FIG. 2 is an isometric view of a heating element with temperature control in FIG. 1.
FIG. 3 is an aspect view of the heating element with temperature control in FIG. 2.
FIG. 4is a rear aspect view of the heating element with temperature control in FIG. 2.
FIG.5 is a right view of the heating element with temperature control in FIG. 2.

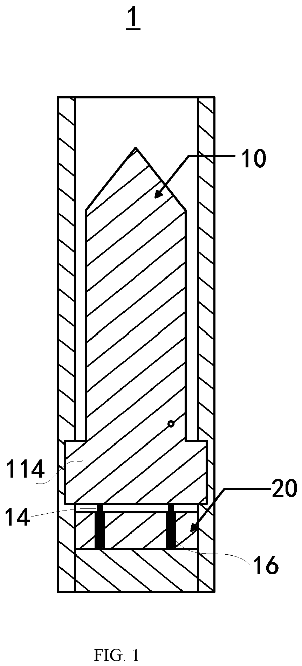

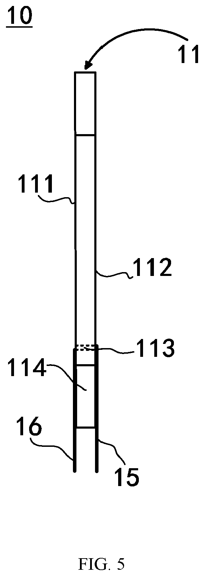

Referring to FIG. 1 to FIG. 5, in which, 1 represents the low-temperature baked smoking set, 10 represents the heating element with temperature control, 11 represents the heating body, 12 represents the heating wire, 13 represents the temperature controlling wire, 14 represents the heating pin, 15 represents the temperature controlling pin, 16 represents the common pin, 17 represents the electric conductor, 111 represents the first surface, 112 represents the second surface, 113 represents the through hole, 114 represents the mounting stage and 20 represents the controller.

### DETAILED DESCRIPTION

The structure and operating principle of the above heating element with temperature control and the low-temperature baked smoking set having same are illustrated below, mainly shown from FIG. 1 to FIG. 5 in further detail using exemplary embodiments.

Referring to FIG. 1, the smoking set 1 includes a heating element with temperature control 10 and a controller 20. The heating element with temperature control 10 is coupled with the controller 20 via electric pins.

The controller 20 has a controlling circuit, by replying on the controlling circuit, it controls the ceramic heating element with temperature control 10 to make the temperature of the ceramic heating element 10 kept at a setting temperature when the smoking set 1 heats tobacco cigarettes, it avoids over-temperature of the heating element 10 makes rate of consuming the tobacco cigarette accelerated, prolonging using time of tobacco cigarettes.

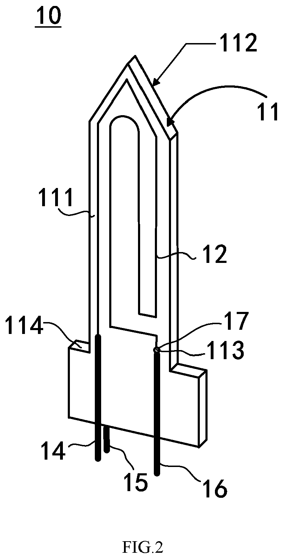

Referring to FIG. 2 to FIG. 5, FIG. 2 is an isometric view of a heating element with temperature control in FIG. 1. The ceramic heating element with temperature control 10 includes a heating body 11, the heating body 11 is generally made of multi-layers of aluminium oxide (Al₂O₃) stacked by high temperature. In the embodiments, the heating body 11 is a plated-shaped panel structure with an isosceles triangle, shaped like a "token", which is in favor of the ceramic heating element 10 with temperature control 10 being inserted into the tobacco cigarette to heat.

The heating body 11 has a first surface 111 and a second surface 112. A heating wire 12 is arranged on the first surface 111 and a temperature controlling wire 13 is arranged on the second surface 112. By replying on the separation setting of the heating wire 12 and the temperature controlling wire 13, it may separate the heating function and the temperature detecting function, which may precisely control the temperature of the ceramic heating element. In this case, the heating wire 12 and the temperature controlling wire 13 respectively adopt resistance wires with different resistance values, which may be printed on the surface of the heating body 11. The temperature controlling wire 13 is a thermistor, with a bigger resistance value than the heating wire, so that the temperature controlling wire 13 may be influenced by the temperature in a more linear way to perceive temperature changes of the heating wire 12 more accurately, therefore controlling the heating temperature of the ceramic heating element 10 more accurately.

In this embodiment, the heating wire 12 and the temperature controlling wire 13 are disposed as a U-shaped loop on the first surface 111 of the heating body 11, entirely covering the first surface 111 and the second surface 112 to make the heating body 11 available of heating evenly. In some embodiments, the heating wire 12 and the temperature controlling wire 13 are disposed as a S-shaped look or a ring loop etc.; also, according to the actual usage, the heating wire 12 and the temperature controlling wire 13 are designed in entirely or partly covering the heating body 11, that is, the heating wire 12 and the temperature controlling wire 13 are disposed on part of the heating body 11 to control the heat of the heating element 10. For example, the heating wire 12 and the temperature controlling wire 13 are respectively disposed on upper parts of the first surface 111 and the second surface 112, so the upper part of the heating body 11 is heated. Likewise, the middle or lower part of the heating body 11 is heated in the same way. Or the heating wire 12 and the temperature controlling wire 13 may be sectionally disposed on different parts of the heating body 11, with coupling different pins corresponding to the different parts of the heating body 11 to realize sectional heating, such as, the hating wire 12 and the temperature controlling wire 13 are divided into three parts and respectively disposed on the upper, middle and lower parts of the heating body 11, each part of the heating wire 12 and the temperature controlling wire 13 is coupled with corresponding pins, then coupled with the control circuit via different corresponding pins to realize sectional heating.

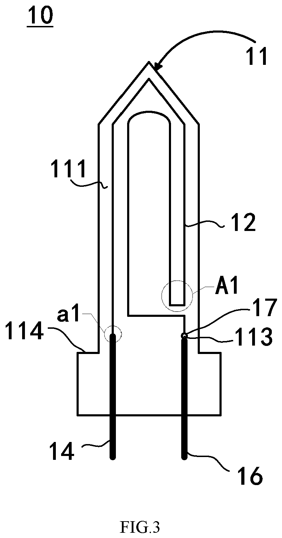

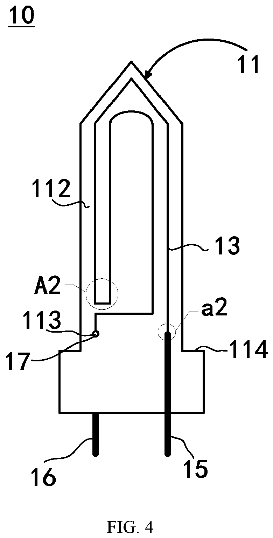

Furthermore, the heating wire 12 and the temperature controlling wire 13 are symmetrically set, more specifically, the heating wire 12 and the temperature controlling wire 13 are set with face to face, such as, FIG. 3 shows the first surface of the heating body 11, in which, the heating wire 12 forms the U-shaped loop on the first surface, a starter A1 of the U-shaped loop is formed on the right side. FIG. 4 shows the second surface of the heating body 11, in which, the temperature controlling wire 13 forms the U-shaped loop on the second surface, a starter A2 of the U-shaped loop is formed on the left side, the heating wire 12 and the temperature controlling wire 13 are symmetrically set with each other. By the symmetrical setting, the temperature controlling wire 13 is capable of more accurately perceiving temperature changes of the heating wire 12 to realize controlling temperature in a more accurate way.

Furthermore, two ends of the heating wire 12 and two ends of the temperature controlling wire 13 are all coupled with pins. The pins are generally made of nickel wires. By replying on the pins, the heating element 10 is coupled with the controller 20. More specifically, the starter a1 of the heating wire 12, as shown in FIG.3, is coupled with the heating pin 14, the starter a2 of the temperature controlling wire 13 as shown in FIG. 4, is coupled with the temperature controlling pin15, the ends of the heating wire 12 and the temperature controlling wire 13 are shared with a common pin 16. In this case, the common pin 16 shared by the heating wire 12 and the temperature controlling wire 13 is an electric conductor 17.

The electric conductor 17 inserts into a through hole 113 bored on the heating body 11. The electric conductor 17 is made of electric conductive material, usually coppers but also other conductive materials. The electric conductor 17 may be a pillar-shaped, a ring-shaped or a flake-shaped electric conductor 17, fixed in the through hole 113 that is bored on the heating body 11 by means of snap fit, glues, welding or screws etc. The ends of the heating wire 12 and the temperature controlling wire13 are respectively coupled with two ends of the electric conductor 17, so as to realize electric conductivity between the heating wire 12 and the temperature controlling wire 13. The common pin 16 needs to be coupled with any end of the electric conductor 17, so as to realize the common pin 16 being shared by the heating wire 12 and the temperature controlling wire 13 and rid one pin in usage, therefore, the number of the electrode terminal is also reduced when the control circuit is designed, saving the cost. In this case, the heating wire 12, the temperature controlling wire 13 and the common pin 16 are welded with the electric conductor 17.

The bottom of the heating body 11 is connected to a mounting stage 114; the mounting stage 114 is designed as rectangular and has a same thickness as the heating body 11. On a horizontal direction, the mounting stage114 has a longer length than the heating body 11, by replying on the mounting stage 114, it makes the heating element 10 fixed in the smoking set 1. More specifically, the heating element 1 may be inserted into the smoking set 1 to fix it. On a vertical direction, the length of the mounting stage 114 is shorter than that of the heating pin 14, the temperature controlling pin 15 and the common pin 16, that is the heating pin 14, the temperature controlling pin 15 and the common pin 16 extend to the mounting stage 114, and the heating pin 14, the temperature controlling pin 15 and the common pin 16 are attached on two maximum sized sides of the mounting stage 114 via tin solder.

A surface of the heating element with temperature control 10 is coated with ceramic glazes. The ceramic glazes are glazed over the heating wire 12, the temperature controlling wire 13 and the electric conductor 17. The heating pin 14, the temperature controlling pin 15 and the common pin 16 are attached on part of the mounting stage 114, to protect the circuit and enhance degree of finish of the surfaces of the heating element 10.

Additional aspects and advantages of the present disclosure will be: compared with the prior art, the present disclosure relates to a heating element with temperature control and a smoking set having the same, including a heating body, the heating body includes a first surface and a second surface, the first surface has a heating wire, the second surface has a temperature controlling wire, with the separation setting of the heating wire and the temperature controlling wire to make the heating function and the temperature detecting functions separable, in aid of more precisely controlling the temperature of the ceramic heating element, in other hand, one end of the heating wire and one end of the temperature controlling wire are respectively connected with the heating pin and the temperature controlling pin; the other ends thereof share one common pin, which may reduce usage of the electrode terminal, as well as saving the cost.

Terminology used herein is for the purpose of describing particular embodiments only and is not intended to be limiting of the invention. Variations may be made to the embodiments and methods without departing from the spirit of the disclosure. Accordingly, it is appropriate that the appended claims be construed broadly and in a manner consistent with the scope of the disclosure.

## Claims

1. A heating element, comprising: a heating body (11), a heating wire (12) is arranged on a surface of the heating body (11); a heating pin (14), one end thereof is coupled with one end of the heating wire (12); the heating body (11) is connected to a mounting stage (114); the heating pin (14) is attached on the surface of the mounting stage (114); on a vertical direction, the heating pin (14) extends from the mounting stage (114) to the heating body (11).

2. The heating element according to claim 1, **characterized in that**, wherein the length of the mounting stage (114) is shorter than that of the heating pin (14).

3. The heating element according to claims 1-2, **characterized in that**, the heating body (11) has a first surface (111) and an opposite second surface (112); the heating wire (12) is arranged on the first surface (111); a temperature controlling wire (13) is arranged on the second surface (112); a temperature controlling pin (15), one end thereof is coupled with the temperature controlling wire (13).

4. The heating element according to claim 3, **characterized in that**, a common pin (16), one end thereof is coupled with an opposite end of the heating wire (12) and an opposite end of the temperature controlling wire (13).

5. The heating element according to claim 4, **characterized in that**, wherein the heating pin (14) and the common pin (16) are attached on the surface of the mounting stage (114); on a vertical direction, the heating pin (14) and the common pin (16) extend from the mounting stage (114) to the heating body (11).

6. The heating element according to claim 5, **characterized in that**, wherein the length of the mounting stage (114) is shorter than that of the heating pin (14) and the common pin (16).

7. The heating element according to claim 6, **characterized in that**, the heating pin (24), the temperature controlling pin (15) and the common pin (16) are attached on the mounting stage (114).

8. The heating element according to claim 7, **characterized in that**, the heating pin (24), the temperature controlling pin (15) and the common pin (16) are attached on two maximum sized sides of the mounting stage (114).

9. The heating element according to claim 3, **characterized in that**, the heating wire (12) and the temperature controlling wire (13) are symmetrically set.

10. The heating element according to claim 3, **characterized in that**, a resistance of the temperature controlling wire (13) is larger than that of the heating wire (12).

11. The heating element according to claim 4, **characterized in that**, the heating body (11) is bored with a through hole (113), an electric conductor (17) is inserted into the through hole (113), the opposite end of the heating wire (12) and the opposite end of the temperature controlling wire (13) are respectively coupled with two ends of the electric conductor (17), the common pin (16) is coupled with the electric conductor (17).

12. The heating element according to claim 11, **characterized in that**, the electric conductor (17) is connected with the through hole (113) via snap fit, a glue or thread screws.

13. The heating element according to claim 11, **characterized in that**, the heating wire (12), the temperature controlling wire (13) and the common pin (16) are welded with the electric conductor (17).

14. The heating element according to any one of claims 1-13, **characterized in that**, a surface of the heating element with temperature control (10) is coated with ceramic glazes.

15. A smoking set comprises: a heating element (10) according to any one of claims 1-14, the heating element (10) is fixed in the smoking set (1) by the mounting stage (114); and a controller (20), configured for controlling the heating element (10) to make a temperature of the heating element (10) kept at a setting temperature when the smoking set heats tobacco cigarettes.
